# EUROPEAN PATENT SPECIFICATION

(11) **EP 4 247 821 B1**
(45) Date of publication and mention of the grant of the patent: **07.10.2026**
(21) Application number: 21827262.3
(22) Date of filing: 17.11.2021
(51) Int. Cl.: C07F 5/06, C08F 4/659, C08F 210/16

(54) **NON-HYDROLYTIC PREPARATION OF SMAO AND CATALYSTS**
NICHT-HYDROLYTISCHE HERSTELLUNG VON SMAC UND KATALYSATOREN
PRÉPARATION NON HYDROLYTIQUE DE SMAO ET DE CATALYSEURS

(30) Priority: 23.11.2020 US 202063117303 P
(43) Date of publication of application: 27.09.2023
(73) Proprietor: ExxonMobil Chemical Patents Inc., Baytown, TX 77520 (US)
(72) Inventor: RIX, Francis, C., Houston, TX 77059 (US); LE, Ky, K., A., Pearland, TX 77584 (US); HARLAN, Charles, J., Houston, TX 77059 (US)
(74) Representative: ExxonMobil Petroleum & Chemical BV
(86) International application number: PCT/US2021/059627
(87) International publication number: WO 2022/108970

(56) References cited:
- WO-A1-2016/170017
- US-A1- 2019 127 499

## Description

### FIELD

The present disclosure relates to a method of forming a supported methylaluminoxane, and more particularly to a high activity olefin polymerization catalyst from *in-situ* prepared non-hydrolytic methylaluminoxane (NH-MAO).

### BACKGROUND

Polyolefins are widely used commercially because of their robust physical properties. For example, various types of polyethylenes, including high density, low density, and linear low density polyethylenes, are some of the most commercially useful. Polyolefins are typically prepared with a catalyst (mixed with one or more other components to form a catalyst system) which promotes polymerization of olefin monomers in a reactor, such as a gas phase reactor.

Methylaluminoxane (MAO), sometimes referred to as polymethylaluminoxane (PMAO), has broad utility as an activator for metallocene and non-metallocenes in olefin polymerization catalysis. It is particularly useful in the preparation of catalysts supported on porous metal oxide supports for use in synthesis of polyethylene or polypropylene and their copolymers in gas-phase or slurry processes (Hlatky, G. (2000) "Heterogeneous Single-Site Catalysts for Olefin Polymerization," Chem. Rev., v.100, pp. 1347-1376; Fink, G. et. al. (2000) "Propene Polymerization with Silica-Supported Metallocene/MAO Catalysts," Chem. Rev., v.100(4), pp. 1377-1390; Severn, J. R. et. al. (2005) ""Bound but Not Gagged"-Immobilizing Single-Site α-Olefin Polymerization Catalysts," Chem. Rev., v.105, pp. 4073-4147). However, MAO is challenging to prepare. MAO is typically formed from the low temperature reaction of trimethylaluminum (TMA) and water in toluene. This reaction is very exothermic and requires special care to control. This solution must be stored cold as it forms an insoluble gel over time at ambient temperature. (Zjilstra, H. S. et. al. (2015) "Methylalumoxane - History, Production, Properties, and Applications," Eur. J. Inorg. Chem., v.2015(1), 19-43). For these reasons, there are only a limited number of commercial manufacturers with the specialized skills and equipment to prepare MAO.

Methylalumoxane, or MAO, is the most popular activator supported on silica to activate a single site catalyst precursor, e.g., a metallocene, to form an active solid catalyst used in a commercial gas phase reactor to produce single-site polyolefin resins. Commercial MAO is commonly sold as a toluene solution because an aromatic solvent can dissolve MAO without causing any issue observed with other solvents, e.g., a donor containing solvent (e.g., an ether or a THF) deactivates MAO, an active proton containing solvent (e.g., an alcohol) reacts and destroys MAO, and an aliphatic solvent (e.g., hexane) precipitates MAO. However, the MAO toluene solution is stored in a cold environment, e.g., at -20 to -30°C, to reduce the gelation process typically observed for this kinetic product. A homogeneous MAO solution is desired for MAO molecules to be evenly distributed in the pores of the catalyst support material, e.g., silica, to obtain a catalyst with good performance including good productivity and good operability. However, polyolefin products are often used as plastic packaging for sensitive products, and the amount of non-polyolefin compounds, such as toluene, present in the polyolefin products should be minimized.

MAO is typically formed from the low temperature reaction of trimethylaluminum (TMA) and water in toluene. This reaction is very exothermic and requires special care to control. MAO is recognized to be a distribution of cage structures with a composition near Al₁O_{0.75}Me_{1.5} when it is freshly prepared. This solution must be stored cold as it forms an insoluble gel over time at ambient temperature. In spite of its wide spread use, the chemical structure of MAO is still uncertain (Zjilstra, H. S. et. al. (2015) Eur. J. Inorg. Chem., 19-43*;* Imhoff, D. W. et. al. (1998) "Characterization of Methylaluminoxanes and Determination of Trimethylaluminum Using Proton NMR," Organometallics, v.17(10), pp. 1941-1945; Ghiotto, F. et. al. (2013) "Probing the Structure of Methylalumoxane (MAO) by a Combined Chemical, Spectroscopic, Neutron Scattering, and Computational Approach," Organometallics, v.32(11), pp. 3354-3362; Collins, S. et al. (2017) "Activation of Cp2ZrX2 (X = Me, Cl) by Methylaluminoxane As Studied by Electrospray Ionization Mass Spectrometry: Relationship to Polymerization Catalysis," Macromolecules, v.50(22), pp. 8871-8884).

MAO has also been prepared by reaction of TMA and organic oxygen sources such as carbon dioxide (US 5,831,109; US 5,777,143), benzoic acid (US 5,831,109, US 6,013,820; US 7,910,764 B2; US 8,404,880 B2; Dalet, T. et. al. (2004) "Non-Hydrolytic Route to Aluminoxane-Type Derivative for Metallocene Activation towards Olefin Polymerisation," Macromol. Chem. and Phys., v.205(10), pp. 1394-1401; Kilpatrick, A.F.R. et. al. (2016) "Synthesis and Characterization of Solid Polymethylaluminoxane: A Bifunctional Activator and Support for Slurry-Phase Ethylene Polymerization," Chem. Mater., v.28(20), pp. 7444-7450), methacrylic acid AkzoNobel WO 2016/170017 A1, US Patent Publication 2019/0127499, and prenol (US 9,505,788 B2). This non-hydrolytic MAO (NH-MAO) is formed with mild heating in hydrocarbon solvents. Compared to traditional MAO, there have been relatively few examples of preparing supported catalysts from NH-MAO. Tosoh has reported the synthesis of solid MAO from benzoic acid and TMA and its utility as an activator support (US 7,910,764 B2; US 8,404,880 B2) for olefin polymerization. O'Hare has followed up on this work in the academic literature (Kilpatrick, et. al. Chem. Materials 2016, 28, 7444).

Supportation of NH-MAO on silica derived from prenol and TMA (US 9,505,788 B2) has been reported. In this preparation, prenol and 1 equivalent of TMA were reacted in toluene then added to a suspension of calcined silica (type and amount undisclosed) followed by addition of more TMA (0.4 equivalent) then heated to reflux and filtered. No MAO was found in the filtrate. No polymerization data was reported.

Favored methods of supporting NH-MAO derived from methacrylic acid or other unsaturated carboxylic acids and TMA in an inert organic solvent were reported in WO 2016/170017. In this patent publication, MAO was prepared in toluene and identified by NMR analysis. No reports of solid MAO formation nor examples of supported catalysts were given. No polymerization behavior was reported.

Recently, US Patent Publication 2019/0127499, reported a preparation of MAO supported on silica useful for olefin polymerization. The reaction of methacrylic acid and 3 equivalents of TMA were carried out at - 20°C in pentane to form a MAO precursor, followed by addition of dehydrated silica. The slurry was then dried to a solid under vacuum and heated in a sealed tube to prepare a supported MAO.

### SUMMARY

A method including: preparing an alumoxane precursor from an organic oxygen source, a hydrocarbyl aluminum, and an organic solvent, wherein the organic oxygen source is methacrylic acid, the hydrocarbyl aluminum is trimethylaluminum, and the organic solvent is toluene; heating the alumoxane precursor to form an alumoxane suspension wherein the alumoxane precursor is heated at a temperature of from 95°C to 115°C; removing solid methylaluminoxane from the alumoxane suspension by filtering the alumoxane suspension to form a filtered solution; and combining the filtered solution with a support to form a supported alumoxane precursor.

In the method, the filtering the alumoxane solution can include filtering the solid methylaluminoxane having one or more of the following properties: a particle size distribution of from about 30 µm to about 45 µm (< 10 %), from about 50 µm to about 70 µm (<25 %), from about 110 µm to about 140 µm (<50 %), from about 390 µm to about 420 µm (< 75 %), or from about 820 µm to about 840 µm (<90 %); a BET Surface area of from about 10 m²/g to about 80 m²/g; and/or a pore volume of from about 0.01 mL/g to about 0.2 mL/g (BJH adsorption cumulative between 17 Å and 3000 Å).

The method can further include drying the supported alumoxane precursor to form a supported alumoxane.

In the method, the organic oxygen source is methacrylic acid, the organic solvent is toluene, and the hydrocarbyl aluminum is trimethylaluminum.

In the method, a molar ratio of the organic oxygen source to the hydrocarbyl aluminum in the alumoxane precursor can be from about 4:5 to about 1:5.

In the method, the preparing an alumoxane precursor can include: introducing the hydrocarbyl aluminum to the organic solvent to form a hydrocarbyl aluminum solvent mixture; introducing the organic oxygen source to the organic solvent to form an organic oxygen solvent mixture; and adding the organic oxygen solvent mixture to the hydrocarbyl aluminum solvent mixture to form the alumoxane precursor.

In the method, the alumoxane precursor is heated at a temperature of from about 95°C to about 115°C.

In the method, the alumoxane suspension can include from about 2 wt% to about 4 wt% of the solid methylaluminoxane and about 96 wt% to about 98 wt% of a solvent mixture comprising non-hydrolytic methylaluminoxane (NH-MAO).

The method can further include cooling the alumoxane suspension at less than about 30°C before the filtering of the alumoxane suspension.

The method can further include generating a supported methylaluminoxane from the supported alumoxane precursor; and generating a catalyst system by introducing one or more catalyst compounds to the supported methylaluminoxane.

In the method, the catalyst compound can include a metallocene.

In the method, the catalyst compound can include a non-metallocene.

The method can further include generating a polymer from the catalyst system.

In the method, activity of the catalyst system can be from about 3,000 g/g to about 20,000 g/g.

Another method can include: preparing an alumoxane precursor from an organic oxygen source, a hydrocarbyl aluminum, and an organic solvent; heating the alumoxane precursor to form an alumoxane suspension; and removing solid methylaluminoxane from the alumoxane suspension by filtering the alumoxane suspension to form a filtered solution, wherein the filtering the alumoxane solution comprises filtering the solid methylaluminoxane having one or more of the following properties, a particle size distribution of from about 30 µm to about 45 µm (< 10%), from about 50 µm to about 70 µm (<25%), from about 110 µm to about 140 µm (<50%), from about 390 µm to about 420 µm (< 75%), or from about 820 µm to about 840 µm (<90%); a BET Surface area of from about 10 m²/g to about 80 m²/g; and/or a pore volume of from about 0.01 mL/g to about 0.2 mL/g (BJH adsorption cumulative between 17 Å and 3000 Å).

The method can include generating a polymer from one or more catalyst compounds and the solid methylaluminoxane.

### BRIEF DESCRIPTION OF THE DRAWINGS

Fig. 1 is a ¹H NMR of solid MAO from Ex. 2 in THF-d8.
Fig. 2 is a ¹H NMR of solid MAO from Ex. 12 in THF-d8.
Fig. 3 is a ¹H NMR of supernatant from Ex. 12 in THF-d8.
Fig. 4 is a flow chart of an exemplary method of the present technological advancement for preparing SMAO.

### DETAILED DESCRIPTION

### Overview

Methylaluminoxane (MAO) is a key component to many gas-phase polyethylene (GPPE) catalysts. The preparation of MAO is challenging and there are a limited number of MAO suppliers.

Exemplary embodiments herein describe a process for preparing high activity supported olefin polymerization catalysts from *in-situ* prepared non-hydrolytic methylaluminoxane (NH-MAO). By way of example, an embodiment of the present technological advancement can utilize a NH-MAO prepared from methacrylic acid (MAA) and trimethylaluminum (TMA) in aromatic solvent, wherein the aromatic solvent is toluene, and subsequent combination with a support and precatalyst. The present technological advancement advantageously avoids the difficult, highly exothermic low temperature reaction between TMA and water. It circumvents the need for obtaining and storing thermally unstable concentrated MAO solutions. It provides high activity supported catalysts useful for olefin polymerization and oligomerization.

As referenced in the background section, preparations of NH-MAO derived catalysts have been reported without experimental data (see, US Patent 9,505,788 and WO 2016/170017). These routes prescribe addition of the initial non-MAO reaction product of TMA and MAA to silica followed by addition of TMA then heating in preferred solvents such as heptane or toluene. In comparative experiments (discussed below), this approach to preparing methylaluminoxane in the presence of silica yielded inactive activators for olefin polymerization.

WO 2016/170017 purports to describe conditions for preparing supported catalysts utilizing methacrylic acid derived NH-MAO. However, no examples are given. In this case, the preferred preparation involves first treating an organic oxygen source and TMA then adding this mixture to a slurry of inorganic oxide followed by further treatment with TMA and heating. This is similar to the report of preparing supported NH-MAO from prenol in US 9,505,788 B2 (by the same assignee as US Patent 9,505,788). In the former case, no preferred catalyst workup was reported. In the latter case, the catalyst was isolated by filtration then drying. However, in these reports, no mention is made of solid MAO formation as a byproduct of this reaction in toluene.

Surprisingly, the reaction of MAA and TMA in toluene forms NH-MAO that can precipitate out of solution as solid NH-MAO. The presence of a solid NH-MAO was not disclosed in US Patent 9,505,788 and WO 2016/170017. Solid NH-MAO combines with precatalysts to make an extremely active polymerization catalyst (see examples below). Polymerizations with solid MAO had productivities of near 20,000 g Pol / g cat h. At the very high polymerization rates with these catalysts, reactor fouling was observed in laboratory gas-phase polymerizations. Fouling can be addressed by removing the solid MAO from the suspension and/or diluting the solid MAO in the solution by adding silica (or whatever the support material being used is) directly to the suspension. For example, the solution MAO can support in the pores and the solid MAO is diluted by the solid silica. The solid MAO can be used to polymerization catalysts.

Based on the comparative examples derived from US Patent 9,505,788 and WO 2016/170017, the conventional approach to preparing methylaluminoxane in the presence of silica yielded inactive activators for olefin polymerization. An improved approach to preparing supported NH-MAO based activator embodying the present technological advancement entailed first preparing a mixture containing NH-MAO from the reaction of MAA and TMA in toluene and then combining the NH-MAO solution with a suitable support such as ES70 amorphous silica followed by drying. This yielded active polymerization catalysts upon combination with precatalyst and monomers.

For example, in a preparation of NH-MAO in toluene, 210 mmol of MAA in 150 mL of toluene was added dropwise to a solution of 806 mmol of TMA in 300 mL of toluene. The reaction was exothermic and the temperature rose to 88.5°C. The mixture was heated further to 105°C and held for 2 hours. Then, the heat was removed and the solution allowed to cool to room temperature (any reference herein to room temperature is 23°C). Over three days, the solution had become cloudy and was filtered, yielding 11 g of white solid and 402 g of a toluene solution containing NH-MAO.

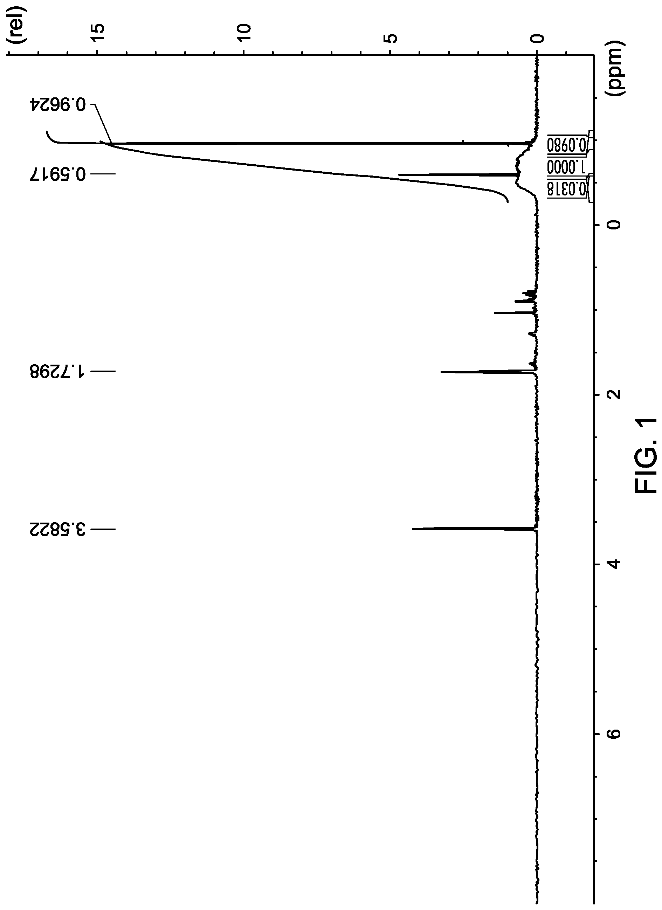

The white solid was soluble in THF-d8 and characterized by NMR spectroscopy (Fig. 1). The NMR has the characteristic features of MAO as compared to an authentic sample reported in the literature (Imhoff, et. al. Organometallics 1998, 17, 1941). The material had a broad particle size distribution and low pore volume and surface area, consistent with a nonporous solid. The material in combination with precatalyst was very active for olefin polymerization.

SMAO and catalysts were prepared from suspensions of NH-MAO and porous silica supports. These catalysts are believed to have solid MAO both outside and inside the supports. In laboratory screening in a salt bed reactor, these catalysts had high activity without observation of fouling.

Supported NH-MAO activators were prepared from the NH-MAO solutions (obtained by filtration), TMA reaction mixtures and silica. These were combined in different orders of addition and dried. Different NH-MAO loadings were examined. Decreasing the level of TMA/MAA in the preparation was also examined. All of the supported NH-MAO gave active polymerization catalysts.

Table 1, below shows productivities of different catalysts ran in laboratory screenings. Samples embodying the present technological advancement had high activity while the comparative samples had very low activity.

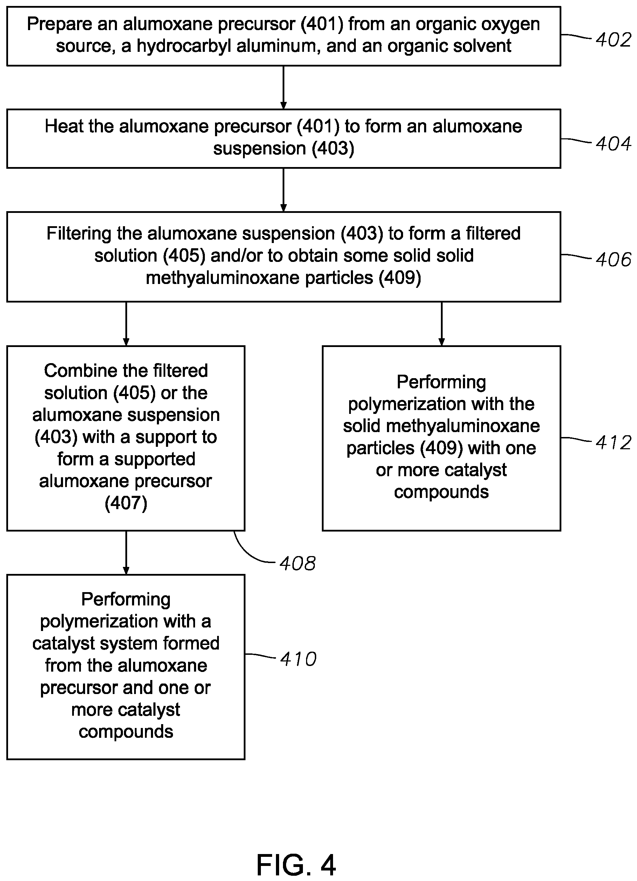

In at least one embodiment, as shown in Fig. 4, a method (400) embodying the present technological advancement includes: preparing an alumoxane precursor (401) by addition of an organic oxygen source to a hydrocarbyl aluminum and an organic solvent (402); heating (404) the alumoxane precursor (401) to form an alumoxane suspension (403); filtering (406) the alumoxane suspension (403) to form a filtered solution (405) and/or to obtain some solid methylaluminoxane particles (409); combining (408) the alumoxane suspension (403) and/or the filtered solution (405) with a support to form a supported alumoxane precursor (407); and performing polymerization with a catalyst system formed from the alumoxane precursor and one or more catalyst compounds (412). Furthermore, the solid methylaluminoxane particles (409) can be used with one more catalyst compounds to perform polymerization (412). However, not every step in Fig. 4 is necessarily performed for every embodiment as will be understood by those of ordinary skill in the art.

### Definitions

The term "about" when used as a modifier for, or in conjunction with, a variable, characteristic or condition is intended to convey that the numbers, ranges, characteristics and conditions disclosed herein are flexible and that practice of the present technological advancement by those skilled in the art using temperatures, rates, times, concentrations, carbon numbers, amounts, contents, properties such as size, density, surface area, etc., that are outside of the stated range or different from a single stated value, will achieve the desired result or results as described in the application, namely, an activated support or catalyst system. All numerical values within the detailed description herein are modified by "about" or "approximately" the indicated value, and take into account experimental error and variations that would be expected by a person having ordinary skill in the art (unless otherwise noted).

For purposes of the present disclosure, "detectable aromatic solvent" means > 20,000 ppm aromatics as determined by gas phase chromatography. For purposes of the present disclosure, "detectable toluene" means > 20,000 ppm or more as determined by gas phase chromatography.

For purposes of the present disclosure, the numbering scheme for the Periodic Table Groups is used as described in Chemical and Engineering News, v.63(5), pg. 27 (1985). Therefore, a "Group 4 metal" is an element from group 4 of the Periodic Table, *e.g.,* Hf, Ti, or Zr.

"Catalyst productivity" is a measure of how many grams of polymer (P) are produced using a polymerization catalyst comprising W g of catalyst (cat), over a period of time of T hours; and may be expressed by the following formula: P/(T x W) and expressed in units of gPgcat⁻¹hr⁻¹. Conversion is the amount of monomer that is converted to polymer product, and is reported as mol% and is calculated based on the polymer yield (weight) and the amount of monomer fed into the reactor. Catalyst activity is a measure of the level of activity of the catalyst and is reported as the mass of product polymer (P) produced per mol of transition metal complex hour (gP/mol transition metal complex x hour). In an at least one embodiment, the productivity of the catalyst is at least 800 gpolymer/gsupported catalyst/hour, such as about 1,000 or more gpolymer/gsupported catalyst/hour, such as about 2,000 or more gpolymer/gsupported catalyst/hour, such as about 3,000 or more gpolymer/gsupported catalyst/hour, such as about 4,000 or more gpolymer/gsupported catalyst/hour, such as about 5,000 or more gpolymer/gsupported catalyst/hour.

A "catalyst system" is a combination of at least one catalyst compound and a support material. The catalyst system may have at least one activator and/or at least one co-activator. When catalyst systems are described as comprising neutral stable forms of the components, it is well understood that the ionic form of the component is the form that reacts with the monomers to produce polymers. For purposes of the present disclosure, "catalyst system" includes both neutral and ionic forms of the components of a catalyst system.

In the present disclosure, the catalyst may be described as a catalyst precursor, a pre-catalyst compound, catalyst compound or a transition metal compound, and these terms are used interchangeably.

For purposes herein, the surface area (SA, also called the specific surface area or BET surface area), pore volume (PV), and pore diameter (PD) of catalyst support materials are determined by the Brunauer-Emmett-Teller (BET) method and/or Barrett-Joyner-Halenda (BJH) method using adsorption-desorption of nitrogen (temperature of liquid nitrogen: 77 K) with a MICROMERITICS TRISTAR II 3020 instrument or MICROMERITICS ASAP 2420 instrument after degassing of the powders for 4 to 8 hours at 100 to 300°C for raw/calcined silica or 4 hours to overnight at 40°C to 100°C for silica supported alumoxane. More information regarding the method can be found, for example, in "Characterization of Porous Solids and Powders: Surface Area, Pore Size and Density," S. Lowell et al., Springer, 2004*.* PV refers to the total PV, including both internal and external PV.

Average particle size and particle size distribution were measured in toluene solvent in a Beckman Coulter LS 13 320 particle size analyzer employing a micro-liquid module.

### Support Materials

In at least one embodiment, a catalyst system includes an inert support material. The support material may be a porous support material, for example, talc, and inorganic oxides. Other support materials include zeolites, clays, organoclays, or any other organic or inorganic support material and the like, or mixtures thereof.

In at least one embodiment, the support material is an inorganic oxide in a finely divided form. Suitable inorganic oxide materials for use in catalyst systems herein include Groups 2, 4, 13, and 14 metal oxides, such as silica, alumina, and mixtures thereof. Other inorganic oxides that may be employed, either alone or in combination, with the silica, or alumina are magnesia, titania, zirconia, and the like. Other suitable support materials, however, can be employed, for example, finely divided functionalized polyolefins, such as finely divided polyethylene, polypropylene, and polystyrene with functional groups that are able to absorb water, e.g., oxygen or nitrogen containing groups such as -OH, -RC=O, -OR, and -NR₂. Particularly useful supports include magnesia, titania, zirconia, montmorillonite, phyllosilicate, zeolites, talc, clays, silica clay, silicon oxide clay, and the like. Also, combinations of these support materials may be used, for example, silica-chromium, silica-alumina, silica-titania, and the like. In at least one embodiment, the support material is selected from Al₂O₃, ZrO₂, SiO₂, SiO₂/Al₂O₂, silica clay, silicon oxide/clay, or mixtures thereof. The support material may be fluorided.

It is preferred that the support material, most preferably an inorganic oxide, has a surface area between about 10 m²/g and about 800 m²/g (optionally 700 m²/g), pore volume between about 0.1 cc/g and about 4.0 cc/g and average particle size between about 5 µm and about 500 µm. In at least one embodiment, the surface area of the support material is between about 50 m²/g and about 500 m²/g, pore volume between about 0.5 cc/g and about 3.5 cc/g and average particle size between about 10 µm and about 200 µm. The surface area of the support material may be between about 100 m²/g and about 400 m²/g, pore volume between about 0.8 cc/g and about 3.0 cc/g and average particle size between about 5 µm and about 100 µm. The average pore size of the support material may be between about 10 Å and about 1000 Å, such as between about 50 Å and about 500 Å, such as between about 75 Å and about 350 Å. In at least one embodiment, the support material is an amorphous silica with surface area of 300 to 400 m²/gm and a pore volume of 0.9 to 1.8 cm³/gm. In at least one embodiment, the supported material may optionally be a sub-particle containing silica with average sub-particle size of 0.05 to 5 micron, e.g., from the spray drying of average particle size of 0.05 to 5 micron small particle to form average particle size of 5 to 200 micron large main particles. In at least one embodiment of the supported material, at least 20% of the total pore volume (as defined by BET method) has a pore diameter of 100 angstrom or more. Non-limiting example silicas include Grace Davison's 952, 955, and 948; PQ Corporation's ES70 series, PD 14024, PD16042, and PD16043; Asahi Glass Chemical (AGC)'s D70-120A, DM-H302, DM-M302, DM-M402, DM-L302, and DM-L402; Fuji's P-10/20 or P-10/40; and the like.

Otherwise, suitable support materials are found in US patent publication 2019/0127499.

### Organic Solvents

Organic solvents may include aromatic solvents, such as toluene or xylene. The organic solvent as claimed is toluene. In some embodiments, organic solvents may include aliphatic solvents, such as butanes, pentanes, hexanes, heptanes, octanes, nonanes, decanes, undecanes, dodecanes, tridecanes, tetradecanes, pentadecanes, hexadecanes, or combination(s) thereof; such as normal paraffins (such as NORPAR^{®} solvents available from ExxonMobil Chemical Company in Houston, TX), isoparaffin solvents (such as ISOPAR^{®} solvents available from ExxonMobil Chemical Company in Houston, TX), or combination(s) thereof. For example, the aliphatic solvent can be selected from C₃ to C₁₂ linear, branched or cyclic alkanes. In some embodiments, the aliphatic solvent is substantially free of aromatic solvent. For example, the aliphatic solvent is essentially free of toluene. Useful aliphatic solvents are ethane, propane, n-butane, 2-methylpropane, n-pentane, cyclopentane, 2-methylbutane, 2-methylpentane, n-hexane, cyclohexane, methylcyclopentane, 2,4-dimethylpentane, n-heptane, 2,2,4-trimethylpentane, methylcyclohexane, octane, nonane, decane, or dodecane, and mixture(s) thereof. In at least one embodiment, the aliphatic solvent is 2-methylpentane or n-pentane. In at least one embodiment, aromatics are present in the aliphatic solvent at less than 1 wt%, such as less than 0.5 wt%, such as at 0 wt% based upon the weight of the solvents. In at least one embodiment, the aliphatic solvent is n-pentane and/or 2-methylpentane.

**In** some embodiments, the organic oxygen source may be in an organic solvent before mixing with the hydrocarbyl aluminum, and the hydrocarbyl aluminum may also be in an organic solvent. In some embodiments, the organic solvent combined with organic oxygen source and the organic solvent combined with the hydrocarbyl aluminum may be the same or different. In at least one embodiment, an alumoxane precursor solution can be prepared by addition of a solution of MAA in toluene to a solution of TMA in toluene causing the temperature to rise to between about 40°C to about 70°C, such as from about 50°C to about 60°C, such as from about 55°C to about 60°C. In some embodiments, the molar ratio of MAA to TMA may be from about 4:5 to about 1:5, such as from about 1:2 to about 1:5, such as from about 1:3 to about 1:4, such as about 1:4.

The reaction product of the addition of the acid to the hydrocarbyl aluminum in the aliphatic solvent may be an alumoxane precursor solution including the alumoxane precursor, unreacted hydrocarbyl aluminum, and the aliphatic solvent(s).

### Hydrocarbyl Aluminum Compounds

The hydrocarbyl aluminum compound is the alkylaluminium compound, trimethylaluminum

**In** at least one embodiment of the present disclosure, the weight ratio of the hydrocarbyl aluminum compound to the support is from about 1:3 to about 4:5, such as about 3:5.

**In** at least one process of the present disclosure, the amount of hydrocarbyl aluminum compound is from about 2 mmol aluminum per gram of support material to 18 mmol aluminum per gram of support material. For example, the amount of hydrocarbyl aluminum compound is from about 4 mmol aluminum per gram of support material to about 12 mmol aluminum per gram of support material, such as from about 6 mmol aluminum per gram of support material to about 10 mmol aluminum per gram of support material.

The hydrocarbyl aluminum compound, in some embodiments of the process, is present in an amount of about 0.1 wt% to about 6 wt% aluminum based on the total weight of the reaction mixture, which when using trimethylaluminum corresponds to between about 0.27 wt% and about 16 wt% trimethylaluminum based on the total weight of the reaction mixture. For example, the amount of aluminum is from about 0.1 wt% to about 6 wt%, such as about 3.2 wt% to about 4.1 wt%, based on the total weight of the reaction mixture. The calculation of the values in this paragraph included silica in the reaction mixture.

### Supported Alumoxane Precursor

The alumoxane precursor is prepared by combining the organic oxygen source, a hydrocarbyl aluminum, and an organic solvent. The ratio of MAA/TMA, for example, can be 0.31 ranges for the amount of organic solvent and oxygen source can be determined by multiplying 0.31 by the wt% from above. For example, the alumoxane precursor can be prepared by introducing the hydrocarbyl aluminum to an organic solvent to form a hydrocarbyl aluminum solvent mixture; introducing the organic oxygen source to the organic solvent to form an organic oxygen solvent mixture; and adding the organic oxygen solvent mixture to the hydrocarbyl aluminum solvent mixture to form the alumoxane precursor. For example, the organic oxygen solvent can be added gradually to the hydrocarbyl aluminum solvent mixture. In some embodiments the organic solvent in the hydrocarbyl aluminum solvent mixture is the same as or different from the organic solvent in the organic oxygen solvent mixture. In some embodiments the organic oxygen solvent mixture is added at a flow rate dependent on the cooling rate and concentration. The temperature of the alumoxane precursor can rise to from about 50°C to about 60°C due to the exothermic reaction if cooling is not applied.

The supported alumoxane precursor is formed by heating the alumoxane precursor to form an alumoxane suspension, filtering the alumoxane suspension (206), and combining the filtered solution with a support material, such as silica. In at least some embodiments, all of the hydrocarbyl aluminum is added before adding the support, such as before filtering alumoxane suspension. In some embodiments, the alumoxane suspension comprises from about 2 wt% to about 4 wt% of solid alumoxane and about 96 wt% to about 98 wt% of a solvent mixture comprising non-hydrolytic methylaluminoxane (NH-MAO). In some embodiments, the alumoxane suspension is cooled to less than about 40°C before filtering the alumoxane suspension, such as less than about 30°C, such as from about 20°C to about 30°C. In some embodiments, the filtered solution has a density of from about 0.7 g/mL to about 1.0 g/mL, such as from about 0.8 g/mL to about 0.9 g/mL. In some embodiments, a solid filtered out of the alumoxane suspension has one or more of the following properties:
a particle size distribution of from about 30 µm to about 45 µm (< 10%), from about 50 µm to about 70 µm (<25%), from about 110 µm to about 140 µm (<50%), from about 390 µm to about 420 µm (< 75%), or from about 820 µm to about 840 µm (<90%);
a BET Surface area of from about 10 m²/g to about 80 m²/g (or preferably 60 to 80, but also any other range defined by values between 10 to 80); and
a pore volume of from about 0.0.01 mL/g to about 0.2 mL/g (or preferably 0.05 to 0.07, but also any other range defined by values between 0.01 to 0.2) (BJH adsorption cumulative between 17 Å and 3000 Å).

The solid MAO can have utility for making a catalyst system, particularly if spherical and appropriate particle size distribution.

### Supported Alumoxane

The supported alumoxane may be formed by drying the supported alumoxane precursor, such as heating the supported alumoxane precursor to a temperature greater than about 60°C, such as from about 60°C to about 80°C. For example, the temperature treatment can be from about 60°C to about 120°C, such as from about 60°C to about 90°C, such as from about 70°C to about 80°C. In some embodiments, the organic solvent is removed under pressures of less than or equal to 20kPa (150 torr), but greater than 0.13 Pa (1 mtorr), at from about 70°C to about 80°C. It is understood that the temperatures and pressures can be adjusted to conditions that enable the solvent to be removed based on the solvent selected. For example, the pressure and temperature conditions in the reactor can be predetermined based on the boiling point of the solvent. In at least one example, the supported alumoxane is SMAO. Thus, the processes described herein can include forming an alumoxane precursor, forming a supported alumoxane precursor, and forming the supported alumoxane.

### Catalyst System

A catalyst system embodying the present technological advancement can be used to produce polymers with any of the catalysts compounds, methods and systems disclosed in US Patent Application Publication 2019/0127499; particularly the metallocene catalyst compounds, non-metallocene catalysts, polymerization processes, gas phase polymerization, and slurry phase polymerization. Such polymers produced by the catalyst system embodying the present technological advancement are suitable for all conventional uses of such polymers, including but not polyolefin products; many of which are described US Patent Application Publication 2019/0127499.

### Examples

Unless specified otherwise, all reagents were obtained from Aldrich Chemical Company. Methacrylic acid (MAA) was sparged with N₂ prior to use. Anhydrous alkanes and toluene were sparged with N₂ then stored over dry 3 Å molecular sieves. ES70 Silica were obtained from PQ Corporation and dehydrated in a tube furnace under a stream of flowing N₂; the temperature of dehydration in degrees Celsius is indicated in brackets within the text. (1,3-Me, BuCp)₂ZrCl₂ (PreCat 1) was obtained from Grace Chemical and purified by crystallization from hexanes. *Rac*-Me₂Si(tetrahydroindenyl)₂ZrCl₂ was obtained from Grace Chemical and methylated with Grignard reagent to obtain *rac*-Me₂Si(tetrahydroindenyl)₂ZrMe₂ (PreCat 2). (PrCp)₂HfMe₂ (PreCat 3) was obtained from Boulder Scientific.

### Comparative 1. Reaction in Heptane.

A 500 mL 3-neck flask, equipped with a condenser and stirbar, was charged with heptane (35 mL) and trimethylaluminum (TMA) (5.0570 g, 70 mmol). A solution of methacrylic acid (MAA) (6.0341 g, 70 mmol) and heptane (50 mL) was added dropwise into the stirred TMA solution. After completion, the TMA/MAA solution turned cloudy.

A 1 L 3-neck flask, equipped with mechanical stirrer, condenser and a heating mantle, was charged with heptane (100 mL) and then stirred. ES70(200) (35.07 g) was added, followed by addition of the above TMA/MAA solution to the silica slurry. TMA/MAA flask was rinsed with heptane (10 mL) onto slurry and the mixture was stirred for 5 minutes. The mixture was stirred for approximately 16 hours. Next, TMA (10.0952 g, 140 mmol) was added to the mixture via pipette. The slurry was heated to reflux for 1 hour then allowed to cool to room temperature. The solids filtered then dried *in-vacuo* at 50°C for 3 hours to afford 57.74 g of comparative SMAO.

### Comparative 1a. Catalyst from Comparative 1

To an overhead stirred slurry of SMAO from Comparative 2 (2.04 g) and pentane (20 mL) was drop-wise added a solution of PreCat 1 (43.1 mg, 0.1 mmol) and pentane (5 mL) dropwise over the course of 5 minutes then stirred for an additional hour then filtered and dried *in-vacuo.* Yield was 1.5 g.

### Comparative 2. Reaction in Toluene.

A 500 mL 3-neck flask, equipped with a condenser and stirbar, was charged with toluene (35 mL) and TMA (5.0595 g, 70 mmol). A solution of MAA (6.0339 g, 70 mmol) and toluene (50 mL) was added dropwise into the stirred TMA solution. After completion, the TMA/MAA solution turned cloudy. A 1 L 3-neck flask, equipped with mechanical stirrer, condenser and a heating mantle, was charged with toluene (100 mL) and then stirred. ES70(200) (35.0191 g) was added, followed by addition of above TMA/MAA solution to the silica slurry. TMA/MAA flask was rinsed with toluene (10 mL) onto slurry and the mixture was stirred for 5 minutes. The mixture was stirred for approximately 16 hours. Next, TMA (10.0989 g, 140 mmol) was added to the mixture via pipette. The slurry was heated to 100°C for 1 hour then allowed to cool to room temperature. The solids filtered then dried *in-vacuo* at 70-80°C afford 59.72 g of comparative SMAO.

### Comparative 2a. Catalyst from Comparative 2

To an overhead stirred slurry of SMAO from Comparative 2 (2.04 g) and pentane (20 mL) was drop-wise added a solution of PreCat 1 (43.7 mg, 0.1 mmol) and pentane (5 mL) dropwise over the course of 5 minutes then stirred for an additional hour then filtered and dried *in-vacuo.* Yield was 1.3 g.

### Example 1a. Supported MAO Preparation

A 2 L 3-neck flask was equipped with 2 L dual heating mantles and fitted with a vacuum capable mechanical stirrer and a N₂ cooled condenser. The flask was charged with toluene (100 mL), trimethylaluminum (TMA) (19.3879 g, 269.8 mmol) and stirred well. Next, a solution of MAA (6.0533 g, 70 mmol) and toluene (50 mL) was added drop-wise via additional funnel over the course of 50 minutes, causing the temperature to rise to 55.9°C. The temperature was increased to 105°C and held for 2 hours. Then, the heat was removed and the solution allowed to cool to room temperature overnight. The solution had become cloudy. ES70(200) silica (35.0577 g) was added then the mixture was heated to 75°C for 2 hours then the solvent was removed under vacuum (75°C) yielding 51 g of white solid.

### Example 1b. Supported Catalyst Preparation (Pre-Cat 1)

A solution of (1,3-Me, BuCp)₂ZrCl₂ (36.4 mg, 84.1 µmol) and heptane (5 mL) were added drop-wise to a slurry of Example 1a SMAO (2.0127 g) and heptane (20 mL) then stirred for 30 minutes causing the color to change from white to light yellow. Afterwards, the catalyst was filtered and dried under vacuum for 1 hour yielding 1.87 g of light yellow solid.

### Example 1c. Supported Catalyst Preparation (Pre-Cat 2)

A solution of *rac*-Me₂Si(tetrahydroindenyl)₂ZrMe₂ (36.6 mg, 88 µmol) and heptane (5 mL) were added drop-wise to a slurry of Example 1a SMAO (2.0245 g) and heptane (20 mL) then stirred for 30 minutes causing the color to change from white to light yellow. Afterwards, the catalyst was filtered and dried under vacuum for 1 hour yielding 1.83 g of light yellow solid.

### Example 1d. Supported Catalyst Preparation (Pre-Cat 3)

A solution of (PrCp)₂HfMe₂ (35.6 mg, 84.2 µmol) and heptane (5 mL) were added drop-wise to a slurry of Example 1a SMAO (2.005 g) and heptane (20 mL) then stirred for 30 minutes causing the color to change from white to light yellow. Afterwards, the catalyst was filtered and dried under vacuum for 1 hour yielding 1.82 g of white solid.

### Example 2. MAO Preparation

A 2 L 3-neck flask was equipped with a heating mantle, a mechanical stirrer and a N₂ cooled condenser. The flask was charged with toluene (300 mL), trimethylaluminum (TMA) (58.1449 g, 806.4 mmol) and stirred well. Next, a solution of MAA (18.1241g, 210 mmol) and toluene (150 mL) was added drop-wise via additional funnel over the course of 90 minutes, causing the temperature to rise to 88.5°C. The temperature was increased to 105°C and held for 2 hours. Then, the heat was removed and the solution allowed to cool to room temperature over 3 days. The solution had become cloudy and was filtered, yielding 11 g of white solid (after drying under vacuum), identified as solid MAO, and 402 g of a toluene solution containing MAO (SMAO precursor). ¹H NMR (THF-d8) is shown in Figure 1, which shows that solid MAO is actually produced. The density of the MAO precursor was 0.866 g / mL.

The solid MAO had a broad particle size distribution: (37 µm (<10%), 63 µm (<25%), 124 µm (<50%), 408 µm (<75%), 832 µm (<90%). BET Surface area was 68 m²/g. Pore volume was 0.058 mL/g (BJH adsorption cumulative between 17 and 3000 Å).

### Example 3a. Supported MAO Preparation

A 125 mL Celstir was charged with ES70(200) silica (10.1701 g) then room temperature SMAO precursor (Example 2) (97 mL, 50 mmol of MeAlO). The slurry was stirred for 10 minutes, then allowed to settle to take a liquor for ¹H NMR (0.2 mL liquor and 0.6 mL THF-d8). The slurry was heated at 75°C with stirring for 2 hours. After heating, stopped stirring and allowed it to settle, obtained ¹H NMR (0.2 mL and 0.6 mL THF-d8). The slurry was transferred to a round bottom flask and dried under vacuum at 75°C for at least 5 hours, yielding 16.5 g SMAO.

### Example 3b. Supported Catalyst Preparation (Pre-Cat 1)

A solution of (1,3-Me, BuCp)₂ZrCl₂ (46.1 mg, 106.6 µmol) and hexane (5 mL) were added drop-wise to a slurry of Example 3a SMAO (2.0334 g) and hexane (20 mL) then stirred for 30 minutes causing the color to change from white to light yellow. Afterwards, the catalyst was transferred to a 100 mL flask and dried under vacuum at 70°C for 1 hour yielding 1.95 g of light yellow solid.

### Example 4a. Supported MAO Preparation

A similar procedure to Example 3a was followed except 20.053 g of ES70(200) silica was used, yielding 27 g SMAO.

### Example 4b. Supported Catalyst Preparation (Pre-Cat 1)

A similar procedure to Example 3b was followed except (1,3-Me, BuCp)₂ZrCl₂ (29.1 mg, 67.3 µmol) and Example 4a SMAO (2.0127 g) were employed yielding 1.9 g of light yellow solid.

### Example 4c. Supported Catalyst Preparation (Pre-Cat 1)

A similar procedure to Example 3b was followed except (1,3-Me, BuCp)₂ZrCl₂ (43.3 mg, 100 µmol), Example 4a SMAO (2.0434 g) and pentane (instead of heptane) were employed yielding 1.8 g of light yellow solid.

### Example 5a. Supported MAO Preparation

A similar procedure to Example 3a was followed except 30 g of ES70(200) and additional toluene (40 mL) were combined with the MAO solution in a larger Celstir (250 mL), yielding 37.3 g SMAO.

### Example 5b. Supported Catalyst Preparation (Pre-Cat 1)

A similar procedure to Example 3b was followed except (1,3-Me, BuCp)₂ZrCl₂ (20.7 mg, 47.9 µmol) and Example 5a SMAO (2.0558 g) were employed yielding 1.91 g of light yellow solid.

### Example 5c. Supported Catalyst Preparation

A similar procedure to Example 3b was followed except (1,3-Me, BuCp)₂ZrCl₂ (43.1 mg, 100 µmol), Example 5a SMAO (2.0697 g) and pentane (instead of heptane) were employed yielding 1.87 g of light yellow solid.

### Example 6. Solid MAO Catalyst Preparation

A similar procedure to Example 3b was followed except (1,3-Me, BuCp)₂ZrCl₂ (92.1 mg, 213 µmol) and Example 2a solid MAO (1.0588 g) were employed yielding 1.09 g of orange solid. As with other catalyst preparations, the solid MAO was slurried in pentane with MCN added to it.

### Example 7. Supported MAO Preparation

A filtered MAO solution, from Example 2, (16.2 mL, 8.3 mmol of MeAlO) was added to a stirred slurry of ES70(200) (5.0517 g) and toluene (25 mL). The slurry was stirred for 15 minutes, then a ¹H NMR of the solution (0.2 mL aliquot in 0.5 mL THF-d8) obtained. Afterwards, the solids were transferred to a 250 mL flask and dried under vacuum at 75°C for at least 2 hours yielding 6.22 g white SMAO.

### Example 8. Supported MAO Preparation

ES70(200) silica (5.0256 g) was added to a stirred solution of toluene (25 mL) and filtered MAO solution, from Example 2, (16.2 mL, 8.3 mmol of MeAlO). The slurry was stirred for 15 minutes, then a ¹H NMR of the solution (0.2 mL aliquot in 0.5 mL THF-d8) obtained. Afterwards, the solids were transferred to a 250 mL flask and dried under vacuum at 75°C for at least 2 hours yielding 6.18 g white SMAO.

### Example 9. Supported Catalyst Preparation

A filtered MAO solution, from Example 2, (16.2 mL, 8.3 mmol of MeAlO) was added to a stirred slurry of ES70(200) and toluene (25 mL). The slurry was stirred for 15 minutes, then a ¹H NMR of the solution (0.2 mL aliquot in 0.5 mL THF-d8) obtained. Next, a solution of (1,3-Me, BuCp)₂ZrCl₂ (139 mg, 312 µmol) and toluene (10 mL) was added then the slurry stirred for 30 minutes. The slurry was transferred to a 250 mL flask and dried under vacuum at 75°C for at least 2 hours yielding 6.26 g of orange solid.

### Example 10. Supported Catalyst Preparation

Filtered MAO solution, from Example 2, (16.2 mL, 8.3 mmol of MeAlO) was added to (1,3-Me, BuCp)₂ZrCl₂ (136 mg, 312 µmol) in a 20 mL vial, stirred for 30 minutes, then added to stirred slurry of ES70(200) (5.0026 g) and toluene (25 mL). After stirring for 30 minutes, the slurry was transferred to a 250 mL flask and dried under vacuum at 75°C for at least 2 hours yielding 6.22 g of orange solid.

### Example 11. MAO Preparation

A 500 mL 3-neck flask was equipped with a heating mantle, a mechanical stirrer and a N₂ cooled condenser. The flask was charged with toluene (30 mL), TMA, (14.8215 g, 205 mmol) and stirred well. Next, a solution of MAA (6.0481, 70 mmol) and toluene (15 mL) was added drop-wise via additional funnel over the course of 50 minutes, causing the temperature to rise to 98°C. The temperature was increased to 105°C and held for 2 hours. Then, the heat was removed and the solution allowed to cool to room temperature overnight. No solids were observed in the solution. Toluene (105 mL) was added and the mixture allowed to sit for 12 days. A haze was observed and the solution filtered.

### Example 12. Solid MAO Preparation

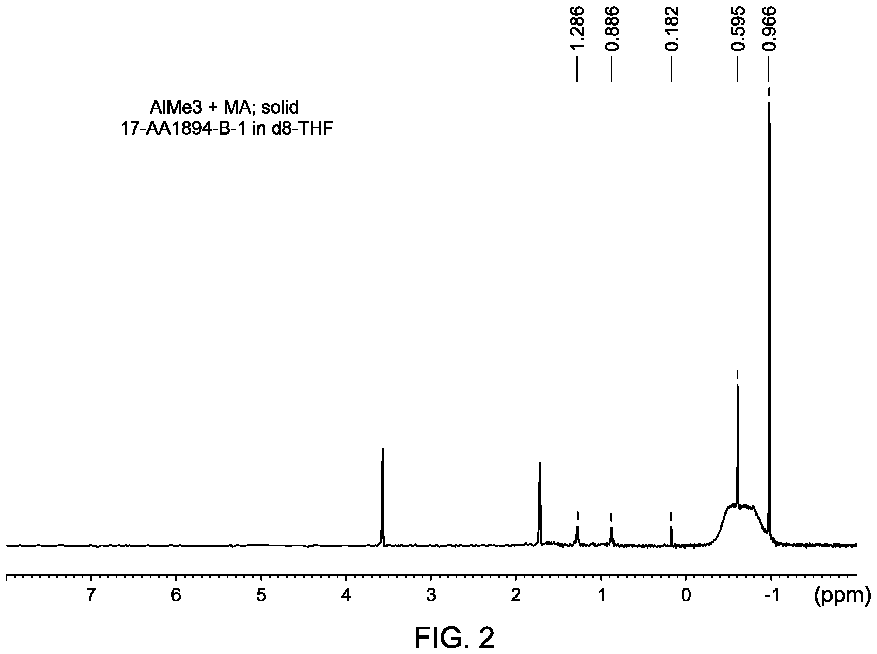

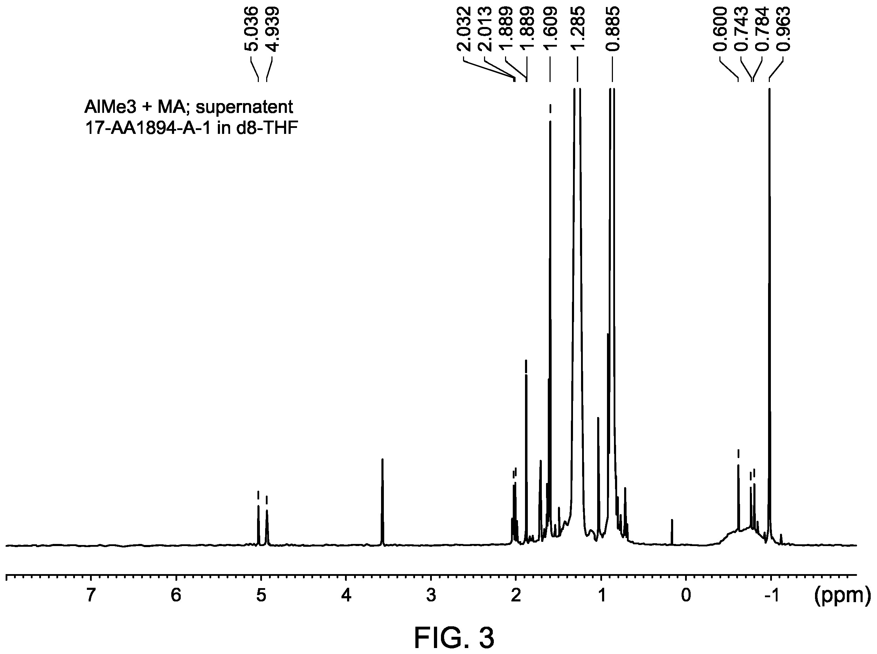

Octane (18.8 mL) and TMA (3.01 g, 42 mmol) were combined and cooled to -20°C and place in a -20°C cold bath. Methacrylic Acid (1.2 g, 13.9 mmol) was added in four portions over about 2 minutes. Each addition produce smoke coming from the reaction but the reaction was not violent. The reaction was stirred for 10 minutes at -20°C then removed from the cold bath and stirred for 15 minutes. The stirbar was removed from the flask and it was placed in an oil bath at 120°C. After 2 hours at 120°C, the solution looked the same as it did to begin with, that is, very slightly cloudy. At this point the flask was removed from the oil bath and allowed to sit at room temp. After sitting over the weekend at room temp there was no precipitate, the reaction was heated to 120°C. After checking periodically over two hours, precipitate was noticed beginning to form. After 5 hours 45 minutes at 120°C the solid was isolated by filtration (the slurry was still relatively warm) washed 2 x 30 mL with pentane and briefly dried under vacuum to give 0.83 g solid. Both the isolated solid and the supematant showed evidence of free TMA from minor smoking in the drybox. The ¹H NMR of the solids in THF-d₈ (all the solid dissolved) showed MAO (Fig. 2). The supernatant tumed cloudy after cooling after the filtration, the ¹H NMR of the supernatant was taken in THF-d₈, showing MAO, TMA and other species remained (Fig. 3). This was accomplished without using toluene or a detectable amount of aromatic solvent. While octane was used, other alkane or aliphatic solvents can be used, which may necessitate an adjustment in pressure (which those of ordinary skill in the art can determine).

### Salt Bed Gas-Phase Polymerization Screening

A 2 L autoclave was charged, under N₂, with NaCl (350 g), TIBAL-SiO₂ scavenger (4 g of 1.85 mmol TIBAL / g ES70(100)) scavenger and heated for 30 minutes at 120°C. The reactor was cooled to ~81°C. 1-Hexene (1.5 mL) and 10% H₂ in N₂ (85 standard cm³/min, also referred to as sccm) were added then the stirring was commenced (450 RPM). Solid catalyst (~ 10 mg) was injected into the reactor with ethylene [+ 1.5 MPaa (+220 psia)]. After the injection, the reactor temperature was controlled at 85°C and ethylene allowed to flow into the reactor to maintain pressure. Both H₂ in N₂, and hexene were fed in ratio to the ethylene flow. The polymerization was halted after 60 minutes by venting the reactor. The polymer was washed with water to remove salt then dried. Data is reported in Table 1. No fouling was observed except for the light fouling observed in the very high activity sample P11.

**Table 1. Semi-batch polymerization testing in salt-bed reactor.**

| **Example** | **Catalyst** | **MCN** | **10 % H₂ Charge (sccm)** | **H₂/C₂ Feed (mg/g)** | **C₆ Charge (mL)** | **C₆/C₂ Feed (g/g)** | **Catalyst (mg)** | **Productivity (gPgcat⁻¹hr⁻¹)** |
|---|---|---|---|---|---|---|---|---|
| Pol 1 | Comp 1 | PreCat 1 | 85 | 0.25 | 1.5 | 0.06 | 23.9 | 134 |
| Pol 2 | Comp 2 | PreCat 1 | 85 | 0.25 | 1.5 | 0.06 | 23.8 | 332 |
| Pol 3 | Ex 1b | PreCat 1 | 85 | 0.25 | 1.5 | 0.06 | 11.9 | 6630 |
| Pol 4 | Ex 1c | PreCat 2 | 85 | 0.25 | 1.5 | 0.06 | 12.4 | 13484 |
| Pol 5 | Ex. 1d | PreCat 3 | 120 | 0.5 | 2.5 | 0.1 | 12 | 6942 |
| Pol 6 | Ex 3b | PreCat 1 | 85 | 0.25 | 1.5 | 0.06 | 11.8 | 7975 |
| Pol 7 | Ex 4b | PreCat 1 | 85 | 0.25 | 1.5 | 0.06 | 24.2 | 4326 |
| Pol 8 | Ex 4c | PreCat 1 | 85 | 0.25 | 1.5 | 0.06 | 12.8 | 3980 |
| Pol 9 | Ex 5b | PreCat 1 | 85 | 0.25 | 1.5 | 0.06 | 36.2 | 3180 |
| Pol 10 | Ex 5c | PreCat 1 | 85 | 0.25 | 1.5 | 0.06 | 12.7 | 3284 |
| Pol 11 | Ex 6 | PreCat 1 | 85 | 0.25 | 1.5 | 0.06 | 3.1 | 19092 |
| Pol 12 | Ex 9 | PreCat 1 | 85 | 0.25 | 1.5 | 0.06 | 12.5 | 2944 |
| Pol 13 | Ex 10 | PreCat 1 | 85 | 0.25 | 1.5 | 0.06 | 12.2 | 2025 |

In some embodiments, the productivity of the catalyst is at least about 2,000 gPgcat⁻¹ hr⁻¹, such as from about 3,000 gPgcat⁻¹hr⁻¹ to about 20,000 gPgcat⁻¹hr⁻¹, such as from about 4,000 gPgcat⁻¹ hr⁻¹ to about 18,000 gPgcat⁻¹hr⁻¹, such as from about 6,000 gPgcat⁻¹hr⁻¹ to about 15,000 gPgcat⁻¹hr⁻¹, alternatively from about 4,000 gPgcat⁻¹hr⁻¹ to about 10,000 gPgcat⁻¹ hr⁻¹, such as from about 6,000 gPgcat⁻¹hr⁻¹ to about 8,000 gPgcat⁻¹hr⁻¹, alternatively from about 8,000 gPgcat⁻¹hr⁻¹ to about 10,000 gPgcat⁻¹hr⁻¹, such as from about 8,000 gPgcat⁻¹hr⁻¹ to about 9,000 gPgcat⁻¹hr⁻¹.

The term "comprising" is considered synonymous with the term "including." Likewise whenever a composition, an element or a group of elements is preceded with the transitional phrase "comprising", it is understood that we also contemplate the same composition or group of elements with transitional phrases "consisting essentially of," "consisting of", "selected from the group of consisting of," or "is" preceding the recitation of the composition, element, or elements and vice versa.

## Claims

1. A method comprising:
preparing an alumoxane precursor from an organic oxygen source, a hydrocarbyl aluminum, and an organic solvent, wherein the organic oxygen source is methacrylic acid, the hydrocarbyl aluminum is trimethylaluminum, and the organic solvent is toluene, and;
heating the alumoxane precursor to form an alumoxane suspension wherein the alumoxane precursor is heated at a temperature of from 95°C to 115°C;
removing solid methylaluminoxane from the alumoxane suspension by filtering the alumoxane suspension to form a filtered solution; and
combining the filtered solution with a support to form a supported alumoxane precursor.

2. The method of claim 1, wherein the filtering the alumoxane solution comprises filtering the solid methylaluminoxane having one or more of the following properties:
a particle size distribution of from 30 µm to 45 µm (<10%), from 50 µm to 70 µm (<25%), from 110 µm to 140 µm (<50%), from 390 µm to 420 µm (<75%), or from 820 µm to 840 µm (<90%);
a BET Surface area of from 10 m²/g to 80 m²/g; and/or
a pore volume of from 0.01 mL/g to 0.2 mL/g (BJH adsorption cumulative between 17 Å and 3000 Å).

3. The method of any preceding claim, further comprising drying the supported alumoxane precursor to form a supported alumoxane.

4. The method of any preceding claim, wherein a molar ratio of the organic oxygen source to the hydrocarbyl aluminum in the alumoxane precursor is from 4:5 to 1:5.

5. The method of any preceding claim, wherein preparing an alumoxane precursor comprises:
introducing the hydrocarbyl aluminum to the organic solvent to form a hydrocarbyl aluminum solvent mixture;
introducing the organic oxygen source to the organic solvent to form an organic oxygen solvent mixture; and
adding the organic oxygen solvent mixture to the hydrocarbyl aluminum solvent mixture to form the alumoxane precursor.

6. The method of any preceding claim, further comprising cooling the alumoxane suspension at less than 30°C before the filtering of the alumoxane suspension.

7. The method of any preceding claim, further comprising:
generating a supported methylaluminoxane from the supported alumoxane precursor; and
generating a catalyst system by introducing one or more catalyst compounds to the supported methylaluminoxane.

8. The method of claim 7, wherein the catalyst compound comprises a metallocene.

9. The method of claim 7, wherein the catalyst compound comprises a non-metallocene.

10. The method of claim 7, further comprising generating a polymer from the catalyst system.

## Patentansprüche

1. Verfahren, umfassend:
Herstellen eines Alumoxan-Vorläufers aus einer organischen Sauerstoffquelle, einem Aluminiumkohlenwasserstoff und einem organischen Lösungsmittel, wobei die organische Sauerstoffquelle Methacrylsäure ist, der Aluminiumkohlenwasserstoff Trimethylaluminium ist und das organische Lösungsmittel Toluol ist, und;
Erwärmen des Alumoxan-Vorläufers zur Bildung einer Alumoxan-Suspension, wobei der Alumoxan-Vorläufer auf eine Temperatur von 95 °C bis 115 °C erwärmt wird;
Entfernen von festem Methylaluminoxan aus der Alumoxan-Suspension durch Filtrieren der Alumoxan-Suspension, zur Bildung einer filtrierten Lösung; und
Kombinieren der filtrierten Lösung mit einem Träger, um einen geträgerten Alumoxan-Vorläufer zu bilden.

2. Verfahren nach Anspruch 1, wobei das Filtrieren der Alumoxanlösung das Filtrieren des festen Methylaluminoxans mit einer oder mehreren der folgenden Eigenschaften umfasst:
eine Teilchengrößenverteilung von 30 µm bis 45 µm (< 10 %), von 50 µm bis 70 µm (< 25 %), von 110 µm bis 140 µm (< 50 %), von 390 µm bis 420 µm (< 75 %) oder von 820 µm bis 840 µm (< 90 %);
eine BET-Oberfläche von 10 m²/g bis 80 m²/g; und/oder
ein Porenvolumen von 0,01 mL/g bis 0,2 mL/g (kumulative BJH-Adsorption zwischen 17 Å und 3000 Å).

3. Verfahren nach einem der vorstehenden Ansprüche, das weiterhin das Trocknen des geträgerten Alumoxan-Vorläufers umfasst, um ein geträgertes Alumoxan zu bilden.

4. Verfahren nach einem der vorstehenden Ansprüche, wobei das Molverhältnis der organischen Sauerstoffquelle zum Aluminiumkohlenwasserstoff im Alumoxan-Vorläufer zwischen 4:5 und 1:5 liegt.

5. Verfahren nach einem der vorstehenden Ansprüche, wobei das Herstellen eines Alumoxan-Vorläufers umfasst:
Einbringen des Aluminiumkohlenwasserstoffs in das organische Lösungsmittel, um ein Aluminiumkohlenwasserstoff-Lösungsmittelgemisch zu bilden;
Einbringen der organischen Sauerstoffquelle in das organische Lösungsmittel, um ein organisches Sauerstoff-Lösungsmittelgemisch zu bilden; und
Zugabe des organischen Sauerstoff-Lösungsmittelgemischs zu dem Aluminiumkohlenwasserstoff-Lösungsmittelgemisch, um den Alumoxan-Vorläufer zu bilden.

6. Verfahren nach einem der vorstehenden Ansprüche, das weiterhin das Abkühlen der Alumoxan-Suspension auf unter 30 °C vor dem Filtrieren der Alumoxan-Suspension umfasst.

7. Verfahren nach einem der vorstehenden Ansprüche, das weiterhin umfasst:
Herstellung eines geträgerten Methylaluminoxans aus dem geträgerten Alumoxan-Vorläufer; und
Herstellung eines Katalysatorsystems durch Einbringen einer oder mehrerer Katalysatorverbindungen in das geträgerte Methylaluminoxan.

8. Verfahren nach Anspruch 7, wobei die Katalysatorverbindung ein Metallocen umfasst.

9. Verfahren nach Anspruch 7, wobei die Katalysatorverbindung ein Nicht-Metallocen umfasst.

10. Verfahren nach Anspruch 7, das weiterhin die Erzeugung eines Polymers mit dem Katalysatorsystem umfasst.

## Revendications

1. Procédé comprenant :
la préparation d'un précurseur d'alumoxane à partir d'une source d'oxygène organique, d'un hydrocarbylaluminium et d'un solvant organique, la source d'oxygène organique étant l'acide méthacrylique, l'hydrocarbylaluminium étant le triméthylaluminium, et le solvant organique étant le toluène, et ;
le chauffage du précurseur d'alumoxane pour former une suspension d'alumoxane, dans lequel le précurseur d'alumoxane est chauffé à une température de 95 °C à 115 °C ;
l'élimination du méthylaluminoxane solide de la suspension d'alumoxane par filtration de la suspension d'alumoxane pour former une solution filtrée ; et
la combinaison de la solution filtrée avec un support pour former un précurseur d'alumoxane sur support.

2. Procédé selon la revendication 1, dans lequel la filtration de la solution d'alumoxane comprend la filtration du méthylaluminoxane solide ayant une ou plusieurs des propriétés suivantes :
une distribution de taille de particules de 30 µm à 45 µm (<10 %), de 50 µm à 70 µm (<25 %), de 110 µm à 140 µm (<50 %), de 390 µm à 420 µm (<75 %), ou de 820 µm à 840 µm (<90 %) ;
une surface BET de 10 m²/g à 80 m²/g ; et/ou
un volume de pores de 0,01 mL/g à 0,2 mL/g (adsorption BJH cumulée entre 17 Å et 3 000 Å).

3. Procédé selon l'une quelconque des revendications précédentes, comprenant en outre le séchage du précurseur d'alumoxane sur support pour former un alumoxane sur support.

4. Procédé selon l'une quelconque des revendications précédentes, dans lequel le rapport molaire de la source d'oxygène organique sur l'hydrocarbylaluminium dans le précurseur d'alumoxane est de 4:5 à 1:5.

5. Procédé selon l'une quelconque des revendications précédentes, dans lequel la préparation d'un précurseur d'alumoxane comprend :
l'introduction de l'hydrocarbylaluminium dans le solvant organique pour former un mélange de solvant et d'hydrocarbylaluminium ;
l'introduction de la source d'oxygène organique dans le solvant organique pour former un mélange de solvant et d'oxygène organique ; et
l'ajout du mélange de solvant et d'oxygène organique au mélange de solvant et d'aluminium hydrocarbyle pour former le précurseur d'alumoxane.

6. Procédé selon l'une quelconque des revendications précédentes, comprenant en outre le refroidissement de la suspension d'alumoxane à moins de 30 °C avant la filtration de la suspension d'alumoxane.

7. Procédé selon l'une quelconque des revendications précédentes, comprenant en outre :
la génération d'un méthylaluminoxane sur support à partir du précurseur d'alumoxane sur support ; et
la génération d'un système de catalyseur par introduction d'un ou plusieurs composés de catalyseur dans le méthylaluminoxane sur support.

8. Procédé selon la revendication 7, dans lequel le composé de catalyseur comprend un métallocène.

9. Procédé selon la revendication 7, dans lequel le composé de catalyseur comprend un non-métallocène.

10. Procédé selon la revendication 7, comprenant en outre la génération d'un polymère à partir du système de catalyseur.
